# EUROPEAN PATENT APPLICATION

(11) **EP 4 414 208 A1**
(43) Date of publication of application: **14.08.2024**
(21) Application number: 23220223.4
(22) Date of filing: 26.12.2023
(51) Int. Cl.: B60L 53/30, B60L 53/63, B60L 53/64, B60L 53/65, B60L 53/66, B60L 58/12

(54) **ELECTRICITY FEEDING CONTROL SERVER AND VEHICLE LENDING SYSTEM AND METHOD**

(30) Priority: 09.02.2023 JP 2023018606
(71) Applicant: TOYOTA JIDOSHA KABUSHIKI KAISHA, Toyota-shi, Aichi-ken 471-8571 (JP)
(72) Inventor: TSUCHIYA, Yoshiyuki, Toyota-shi, Aichi-ken 471-8571 (JP)
(74) Representative: Cabinet Beau de Loménie

(57) **Abstract**

An electricity feeding control server (S) used to control electricity feed-out at a vehicle (20) that is capable of performing external charge and the electricity feed-out, the external charge charging an on-board electricity storage device (36) with electricity externally supplied, the electricity feed-out feeding electricity from the electricity storage device (36) to external equipment, wherein when a remaining charge (SOC) of the electricity storage device (36) becomes a first remaining charge (SOCs) during the electricity feed-out, the electricity feeding control server (S) transmits an instruction to stop the electricity feed-out to the vehicle (20), the first remaining charge (SOCs) being a lower limit of the remaining charge (SOC) of the electricity storage device (36) at which the vehicle (20) manages to travel from a current position of the vehicle (20) to a charging facility where the external charge of the electricity storage device (36) is possible by using electricity from outside of the vehicle (20).

## Description

### 1. Field of the Invention

The invention relates to an electricity feeding control server and a vehicle lending system and method.

### 2. Description of Related Art

Conventionally, for an electricity feeding control server of the type of interest, there has been proposed a sever that controls electricity feed-out at a plurality of vehicles that is capable of both external charge of charging an on-board electricity storage device with electricity externally supplied, and electricity feed-out of feeding electricity from the electricity storage device to external equipment (for example, see Japanese Unexamined Patent Application Publication No. 2021-93831 (JP 2021-93831 A)). When causing the plurality of vehicles to perform electricity feed-out, the server creates a schedule such that among the plurality of electricity storage devices, an electricity storage device with a lower probability of running out of electricity (risk of running out of electricity), which is based on a remaining charge of the electricity storage device, performs electricity feed-out earlier. Thus, running out of electricity is curbed.

### SUMMARY OF THE INVENTION

The above-described electricity feeding control server determines the probability of running out of electricity, based on the remaining charge of an electricity storage device. However, the probability of running out of electricity is not determined only based on the remaining charge of an electricity storage device, but may vary depending on a distance from a current position of the vehicle to a charging facility. Accordingly, when electricity feed-out is performed depending on the probability of running out of electricity determined based solely on the remaining charge of each electricity storage device, a vehicle may run out of electricity in some cases.

A primary object of an electricity feeding control server and a vehicle lending system of the invention is to prevent a vehicle from running out of electricity.

To achieve the primary object, the electricity feeding control server and the vehicle lending system of the invention are devised as follows. The electricity feeding control server of the invention is an electricity feeding control server used to control electricity feed-out at a vehicle that is capable of performing external charge and the electricity feed-out, the external charge charging an on-board electricity storage device with electricity externally supplied, the electricity feed-out feeding electricity from the electricity storage device to external equipment, wherein when a remaining charge of the electricity storage device becomes a first remaining charge during the electricity feed-out, the electricity feeding control server transmits an instruction to stop the electricity feed-out to the vehicle, the first remaining charge being a lower limit of the remaining charge of the electricity storage device at which the vehicle manages to travel from a current position of the vehicle to a charging facility where the external charge of the electricity storage device is possible by using electricity from outside of the vehicle.

The electricity feeding control server of the invention transmits the instruction to stop the electricity feed-out to the vehicle when, the remaining charge of the electricity storage device becomes the first remaining charge, which is the lower limit of the remaining charge of the electricity storage device at which the vehicle manages to travel from the current position thereof to the charging facility where the external charge of the electricity storage device can be performed by using electricity from outside of the vehicle. The vehicle that has received the instruction to stop the electricity feed-out stops the electricity feed-out, whereby it is possible to prevent the electricity feed-out from being performed to such an extent that the vehicle becomes unable to travel to the charging facility. As a result, it is possible to prevent the vehicle from running out of electricity.

When the remaining charge of the electricity storage device becomes less than a second remaining charge that is more than the first remaining charge from a remaining charge that is equal to or more than the second remaining charge, the electricity feeding control server of the invention may send a predetermined notification to a mobile terminal carried by a user of the vehicle that is performing the electricity feed-out. Thus, the user of the vehicle recognizes a situation and stops the electricity feed-out before the electricity feed-out is performed to such an extent that the vehicle becomes unable to travel to the charging facility, whereby it is possible to prevent the electricity feed-out from being performed to such an extent that the vehicle becomes unable to travel to the charging facility.

In such a case, the predetermined notification may be a notification that requests an input indicating whether or not to continue the electricity feed-out from the mobile terminal, and when the instruction to stop the electricity feed-out is received from the mobile terminal after the predetermined notification, the electricity feeding control server may transmit the instruction to stop to the vehicle. Thus, the electricity feed-out of the vehicle can be stopped at a timing matched with an intention of the user.

The electricity feeding control server of the invention in the aspect of sending the predetermined notification to the user of the electricity feed-out when the remaining charge of the electricity storage device becomes less than the second remaining charge from the remaining charge that is equal to or more than the second remaining charge, when the remaining charge of the electricity storage device is less than the second remaining charge, may calculate an electricity feeding fee to be charged to the user by using a higher fee per unit time or a higher fee per unit electricity amount than when the remaining charge of the electricity storage device is the second remaining charge or more. It is conceivable that the user charged the thus calculated electricity feeding fee, when using the vehicle, will avoid using the electricity feed-out when the remaining charge of the electricity storage device is less than the second remaining charge from next time onwards. Accordingly, by calculating an electricity feeding fee to be charged to the user by using a higher fee per unit time or a higher fee per unit electricity amount than when the remaining charge of the electricity storage device is the second remaining charge or more, it is possible to urge the user to restrain the electricity feed-out.

A vehicle lending system and method of the invention are respectively a vehicle lending system and method in which a vehicle that is capable of external charge and electricity feed-out is lent to a user who desires to use the vehicle, the external charge charging an on-board electricity storage device with electricity externally supplied, the electricity feed-out feeding electricity from the electricity storage device to external equipment, the vehicle lending system including an electricity feeding control server used to control the electricity feed-out at the vehicle, wherein when a remaining charge of the electricity storage device becomes a first remaining charge during the electricity feed-out, the electricity feeding control server transmits the instruction to stop to the vehicle, the first remaining charge being a lower limit of the remaining charge of the electricity storage device at which the vehicle manages to travel from a current position of the vehicle to a charging facility where the external charge of the electricity storage device is possible by using electricity from outside of the vehicle, and when the instruction to stop is received, the vehicle stops the electricity feed-out.

In the vehicle lending system of the invention, when the remaining charge of the electricity storage device becomes the first remaining charge, which is the lower limit of the remaining charge of the electricity storage device at which the vehicle manages to travel from the current position thereof to the charging facility where the external charge of the electricity storage device can be performed by using electricity from outside of the vehicle, the instruction to stop the electricity feed-out is transmitted to the vehicle, and when the instruction to stop is received, the vehicle stops the electricity feed-out. Thus, it is possible to prevent the electricity feed-out from being performed to such an extent that the vehicle becomes unable to travel to the charging facility. As a result, it is possible to prevent the vehicle from running out of electricity.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a configuration diagram showing a schematic configuration of a vehicle lending system 10 including an electricity feeding control server;
FIG. 2 is an example of a process executed by a server S, a mobile terminal 94;
FIG. 3 is an example of a display on a display 94a in step S310;
FIG. 4 is an example of a display on the display 94a in step S340; and
FIG. 5 is an example of operation in the vehicle lending system 10.

### DETAILED DESCRIPTION OF EMBODIMENTS

Next, a mode for carrying out the invention is described by using an embodiment.

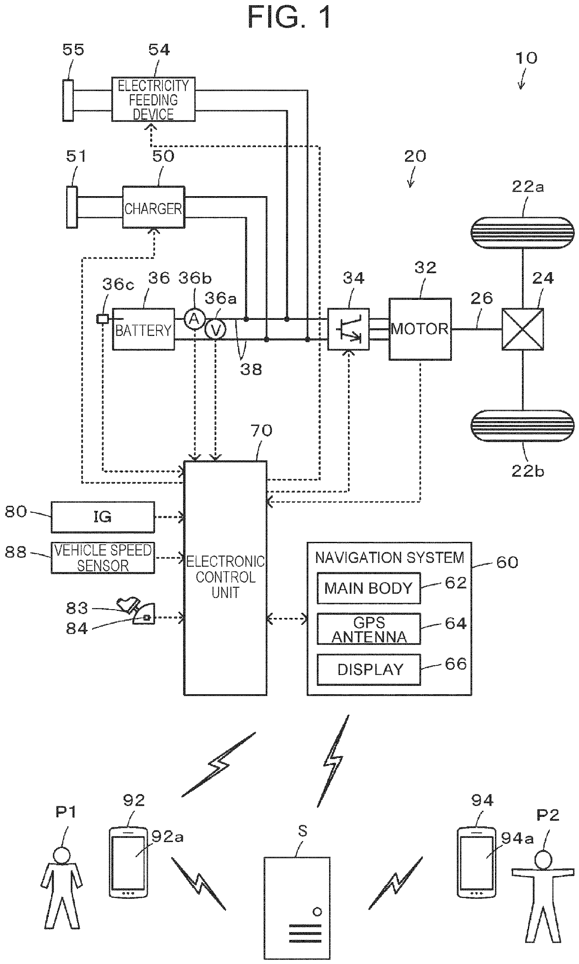

FIG. 1 is a configuration diagram showing a schematic configuration of a vehicle lending system 10 including an electricity feeding control server, as an embodiment of the invention. The vehicle lending system 10 includes a battery electric vehicle 20, a server (electricity feeding control server) S, and mobile terminals 92, 94.

The battery electric vehicle 20, as depicted, includes a motor 32, an inverter 34, a battery 36 as an electricity storage device, a charger 50, an electricity feeding device 54, a navigation system 60, and an electronic control unit 70.

A rotor of the motor 32 is connected to a drive axle 26, which is coupled to drive wheels 22a, 22b via a differential gear 24. The inverter 34 is used to drive the motor 32 and is connected to the battery 36 through an electricity line 38. Switching of a plurality of undepicted switching elements of the inverter 34 is controlled by the electronic control unit 70, whereby the motor 32 is driven to rotate. The battery 36 is configured as, for example, a lithium-ion secondary battery or a nickel-metal-hydride secondary battery.

The charger 50 is connected to the electricity line 38 and is configured to be able to perform external charge of charging the battery 36 by using electricity from a charging facility when a facility-side connector of the charging facility and a vehicle-side connector 51 are connected. The charger 50 is controlled by the electronic control unit 70. Here, the charging facility refers to a facility that can supply electricity to the battery electric vehicle 20.

The electricity feeding device 54 is connected to the electricity line 38 and is configured to be able to convert direct-current electricity from the electricity line 38 (battery 36) into alternate-current electricity at a predetermined voltage (for example, 100 V or the like) and feed the electricity to external equipment (for example, an electric appliance, a mobile terminal, or the like) that is not a constituent element of the vehicle when an electricity-receiving-side connector of the external equipment and an electricity feeding connector 55 are connected. Note that the number of electricity feeding connectors 55 is not limited to one, and may be two or more.

The navigation system 60 includes a main body 62, a GPS antenna 64, and a display 66. The main body 62 includes a storage medium, such as a hard disk, storing map information and the like, as well as a CPU, a ROM, a RAM, input and output ports, and a communication port. The GPS antenna 64 receives information related to a current position of the vehicle. The display 66 is of a touch panel type, and displays various information, such as the map information, the current position of the own vehicle, and a planned travel route to a destination, and also allows a user to input various instructions. Here, the map information includes service information (for example, information related to facilities, car parks, and charging facilities), road information on each preset travel section (for example, between signal lights, intersections, or the like), and the like. The road information includes distance information, width-of-road information, number-of-lanes information, region information (urban area or suburban area), category information (general road or motorway, toll road), gradient information, legal speeds, the number of traffic lights, and the like. The navigation system 60 is connected to the electronic control unit 70 via the communication port. In the navigation system 60, when a destination is set by a user operating the display 66, the main body 62 configures a planned travel route from the current position of the vehicle to the destination based on the map information, the current position and the destination, displays the configured planned travel route on the display 66, and performs route guidance.

The electronic control unit 70 is configured as a microprocessor centered on an undepicted CPU and includes, in addition to the CPU, a ROM storing a processing program, a RAM for temporarily storing data, input and output ports, and a communication port. Signals from various sensors are input to the electronic control unit 70 via the input port. The signals input to the electronic control unit 70 include, for example, a rotational position θm of the rotor of the motor 32 from an undepicted rotational position sensor, which detects a rotational position of the rotor of the motor 32, and respective phase currents Iu, Iv, Iw of phases of the motor 32 from an undepicted current sensor, which detects a phase current of each phase of the motor 32. Examples of the signals can also include a voltage Vb of the battery 36 from a voltage sensor 36a, which is attached between terminals of the battery 36, input and output currents Ib of the battery 36 from a current sensor 36b, which is attached to an output terminal of the battery 36, and a temperature Tb of the battery 36 from a temperature sensor 36c, which is attached to the battery 36. An ignition signal from an ignition switch 80, an accelerator operation amount Acc from an accelerator pedal position sensor 84, which detects an amount of operation of an accelerator pedal 83, and a vehicle speed V from a vehicle speed sensor 88 can also be included.

Various control signals are output from the electronic control unit 70 via the output port. The signals output from the electronic control unit 70 include, for example, a control signal to the inverter 34, a control signal to the charger 50, and a control signal to the electricity feeding device 54. The electronic control unit 70 calculates an amount of stored electricity Sb in or a state of charge SOC of the battery 36, based on an integrated value of the input and output currents Ib of the battery 36 from the current sensor 36b. Here, the amount of stored electricity Sb is an amount of electricity dischargeable from the battery 36, and the state of charge SOC is the proportion of the amount of stored electricity Sb (remaining charge) to the whole capacity Scap of the battery 36.

The electronic control unit 70, as mentioned above, is connected to the navigation system 60 via the communication port. The electronic control unit 70 is configured to be able to wirelessly communicate with the mobile terminal 92 and the server S.

In the thus configured battery electric vehicle 20 according to the embodiment, the electronic control unit 70 sets a required torque Td* required for traveling (required of the drive axle 26) based on the accelerator operation amount Acc and the vehicle speed V, sets the required torque Td* in a torque instruction Tm* to the motor 32, and performs switching control of the plurality of switching elements of the inverter 34 such that the motor 32 is driven based on the torque instruction Tm*. The electronic control unit 70 transmits a state of charge SOC calculated in each predetermined period to the mobile terminal 92 and the server S.

Moreover, in the battery electric vehicle 20 according to the embodiment, when the vehicle-side connector 51 is connected to the facility-side connector of a charging facility, such as a home or a charging station, while the vehicle is parked at the charging facility, the electronic control unit 70 performs external charge by controlling the charger 50 in such a manner that the battery 36 is charged with electricity from the charging facility. When the state of charge SOC of the battery 36 becomes a predetermined state Smax, the control of the charger 50 is ceased, whereby the performing of the external charge is ceased. For the predetermined state Smax, for example, 90%, 95%, 100%, or the like is used.

Further, in the battery electric vehicle 20 according to the embodiment, when the electricity feeding connector 55 is connected to the electricity-receiving-side connector of external equipment while the vehicle is parked, the electronic control unit 70 performs electricity feed-out by controlling the electricity feeding device 54 in such a manner that electricity from the battery 36 is fed to the external equipment through the electricity line 38.

The server S is installed in an undepicted data center and is configured as a general-purpose microcomputer centered on a CPU. The server S is configured to be able to wirelessly communicate with the battery electric vehicle 20 and the mobile terminals 92, 94.

The mobile terminals 92, 94 are each configured as a portable computer such as a smartphone or a tablet terminal. The mobile terminal 92 is carried by a provider (owner) P1 of the battery electric vehicle 20 and exchanges various information with the server S through wireless communication. The mobile terminal 94 is carried by a user P2 who is different from the provider P1 of the battery electric vehicle 20, and exchanges various information with the server S through wireless communication.

The thus configured vehicle lending system 10 provides a service of lending the battery electric vehicle 20 owned by the provider P1 to the user P2. In the lending service, when a condition for provision on which the provider P1 of the battery electric vehicle 20 provides the battery electric vehicle 20, which is transmitted from the mobile terminal 92, and a desired condition for use on which the user P2 who desires to use the battery electric vehicle 20 uses the battery electric vehicle 20, which is transmitted from the mobile terminal 94, coincide with each other, the server S notifies the provider P1, the user P2 that lending is possible by making a display to such effect on displays 92a, 94a of the mobile terminals 92, 94 of the provider P1, the user P2. The user P2 who has recognized the display on the display 94a of the mobile terminal 94 moves to a depository P11. The provider P1 who has recognized the display on the display 92a of the mobile terminal 92 lends the battery electric vehicle 20 to the user P2 after confirming the user P2 on the display 92a. Thus, the user P2 starts using the battery electric vehicle 20. Here, examples of the condition for provision include the depository P11 of the battery electric vehicle 20, such as a home, a lending period Lp1 for which the battery electric vehicle 20 can be lent, a state of charge SOC1 required for traveling after the battery electric vehicle 20 is returned, and the like. Examples of the desired condition for use include a place P12 where the user P2 desires to rent the battery electric vehicle 20, a period of use Up2 of the battery electric vehicle 20, an amount of fed electricity Cp2 supposed to be fed when electricity feed-out is used, and the like. The server S determines that the condition for provision and the desired condition for use coincide with each other when the depository P11 is within a predetermined range including the place P12, the period of use Up2 is included in the lending period Lp1, and a value obtained by subtracting the state of charge SOC1 from the current state of charge SOC of the battery electric vehicle 20 (= SOC - SOC1) is equal to or more than a value obtained by converting the amount of fed electricity Cp2 into a state of charge SOC of the battery 36.

When the use of the battery electric vehicle 20 is finished, the user P2 drives the battery electric vehicle 20 to the depository P11 and returns the battery electric vehicle 20 to the provider P1. The provider P1 to which the battery electric vehicle 20 has been returned inputs the fact of return into the mobile terminal 92, and the mobile terminal 92 transmits, to the server S, the fact that the battery electric vehicle 20 has been returned. When the server S receives the fact of return, the server S charges a lending fee according to the period of use Up2 of the battery electric vehicle 20 by the user P2 and an electricity feeding fee according to the amount of electricity fed out from the battery 36.

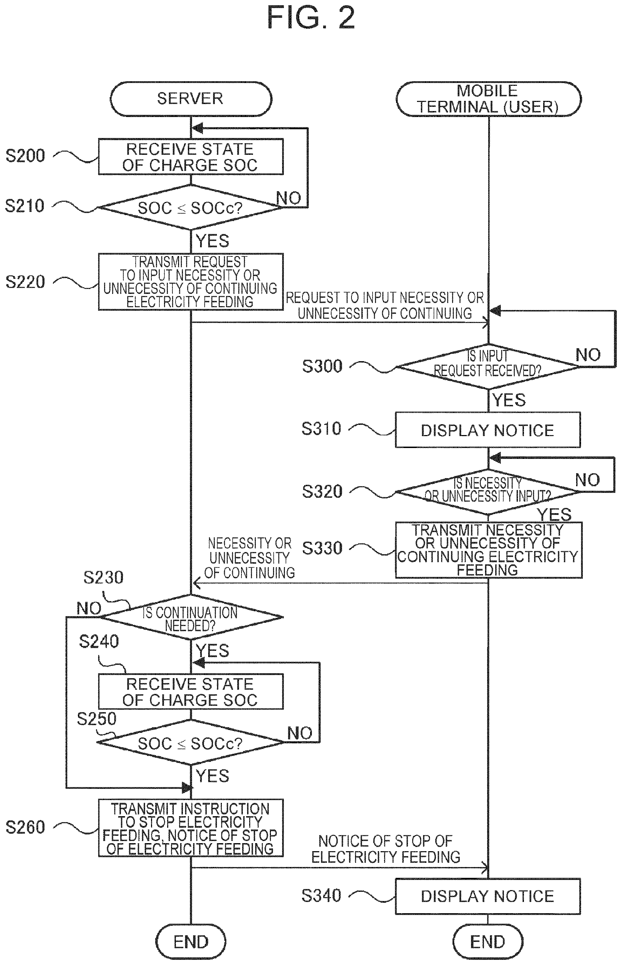

Next, a description is given of operation of the thus configured vehicle lending system 10, particularly, of operation at a time of performing electricity feed-out of the battery electric vehicle 20 when the battery electric vehicle 20 is lent to the user P2. FIG. 2 is a flowchart showing an example of a process executed by the server S, the mobile terminal 94. The routine is executed when electricity feed-out of the battery electric vehicle 20 is performed while the battery electric vehicle 20 is lent to the user P2. Note that when the electricity feed-out is stopped by the user P2 while the routine is being executed, the execution of the routine is terminated.

When electricity feed-out of the battery electric vehicle 20 is performed, the server S receives a state of charge SOC from the battery electric vehicle 20 (step S200), and determines whether or not the state of charge SOC becomes a threshold value (second remaining charge) SOCc (step S210). The threshold value SOCc is a threshold value for determining that the remaining charge is becoming tight although the state of charge SOC of the battery 36 has yet to immediately become a threshold value (first remaining charge) SOCs that is a lower limit of the state of charge SOC (remaining charge of the battery 36) at which the battery electric vehicle 20 manages to travel from the current position thereof to a charging facility where external charge is possible. The threshold value SOCc is set to a state of charge larger than the threshold value SOCs. The threshold value SOCs is a value set based on a distance between the current position of the battery electric vehicle 20 and a charging facility nearest to the current position, and on an average electricity economy of the battery electric vehicle 20. When the state of charge SOC exceeds the threshold value SOCc, it is determined that the battery 36 has a sufficient charge, and the process returns to step S200, and steps S200, S210 are executed until the state of charge SOC becomes the threshold value SOCc. When the state of charge SOC becomes the threshold value SOCc in step S210, it is determined that the battery 36 is becoming tight, and a notification is made to request an input indicating whether or not to continue the electricity feed-out, by transmitting, to the mobile terminal 94, a request to input necessity or unnecessity of continuing the electricity feed-out (step S220).

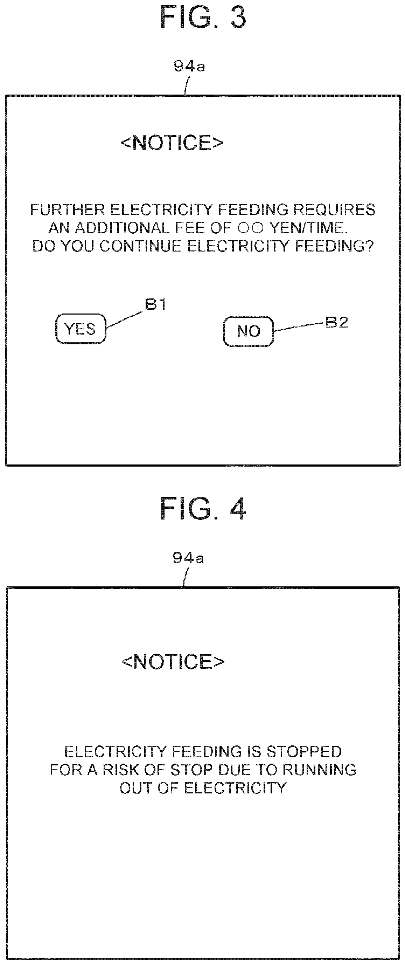

When the mobile terminal 94 receives the request to input necessity or unnecessity of continuing the electricity feed-out (step S300), a notice prompting an input of necessity or unnecessity of continuing the electricity feed-out is displayed on the display 94a of the mobile terminal 94 (step S310), and the user P2 is waited for to input necessity or unnecessity of continuing the electricity feed-out (step S320). FIG. 3 is an explanatory diagram for describing an example of the display on the display 94a in step S310. As depicted, the display 94a displays an indication that an additional fee is incurred when the electricity feed-out is continued. By charging the user P2 an additional fee when the electricity feed-out is continued as described above, it is possible to urge the user P2 to stop the electricity feed-out. Accordingly, it is possible to restrain the state of charge SOC of the battery 36 of the battery electric vehicle 20 from lowering due to the electricity feed-out being continued. When necessity or unnecessity of continuing is input by the user P2 selecting either a "YES" button B1 or a "NO" button B2, the input necessity or unnecessity of continuing is transmitted to the server S (step S330).

The server S receives the necessity or unnecessity of continuing the electricity feed-out and, when continuation is not needed (step S230), transmits an instruction to stop the electricity feed-out to the battery electric vehicle 20 and the mobile terminal 94 (step S260), and the process is terminated. Thus, the electricity feed-out can be ceased at a timing matched with an intention of the user P2. When an indication of continuing the electricity feed-out is received in step S230, a state of charge SOC is received from the battery electric vehicle 20 (step S240), and it is determined whether or not the state of charge SOC becomes the threshold value SOCs (step S250). When the state of charge SOC has not become the threshold value SOCs, that is, when the state of charge SOC has become the threshold value SOCc but still exceeds the threshold value SOCs, it is determined that electricity does not immediately run out even if the electricity feed-out is continued, and step S240 of receiving a state of charge SOC and step S250 of determining whether or not the state of charge SOC becomes the threshold value SOCs are repeated. When the state of charge SOC becomes the threshold value SOCs, it is determined that electricity can run out if the electricity feed-out is continued, an instruction to stop the electricity feed-out is transmitted to the battery electric vehicle 20 and the mobile terminal 94 (step S260), and the process is terminated. After such a process is terminated, in a case where the electricity feed-out was performed when the state of charge SOC of the battery 36 was less than the threshold value SOCc, the server S calculates an electricity feeding fee to be charged to the user P2 by using a higher fee per unit time or a higher fee per unit electricity amount than when the state of charge SOC of the battery 36 exceeds the threshold value SOCc, and charges the user P2 the electricity feeding fee. Thus, it is possible to urge the user P2 to restrain the excessive continuation of the electricity feed-out.

When the mobile terminal 94 receives the instruction to stop the electricity feeding, a notice indicating that the electricity feeding is stopped is displayed on the display 94a of the mobile terminal 94 (step S340), and the process is terminated. FIG. 4 is an explanatory diagram for describing an example of the display on the display 94a in step S340. FIG. 4 shows an example of the display on the display 94a at a time when the state of charge SOC becomes the threshold value SOCs in step S250 and the instruction to stop the electricity feed-out is transmitted to the mobile terminal 94. By displaying on the display 94a an indication that the electricity feeding is stopped because there is a possibility that the battery electric vehicle 20 stops due to running out of electricity as depicted, it is possible to allow the user P2 to recognize a reason why the electricity feeding is stopped.

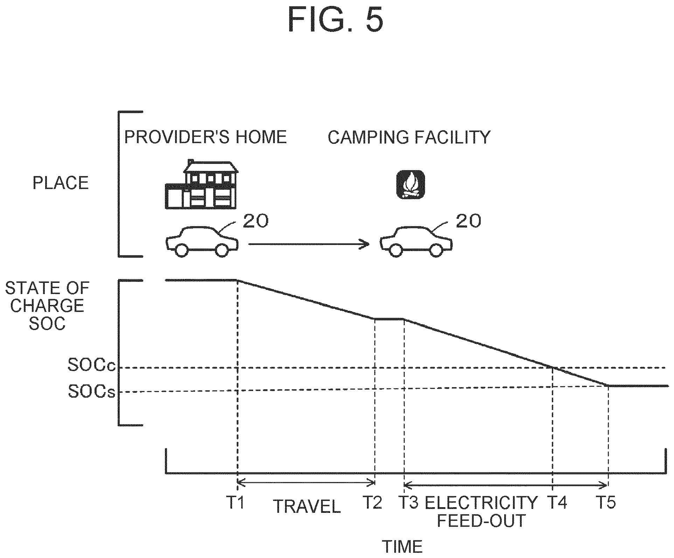

FIG. 5 is an explanatory diagram for describing an example of operation of the vehicle lending system 10. When the battery electric vehicle 20 is lent to the user P2, the battery electric vehicle 20 travels to a destination of the user P2, such as a camping facility, and the state of charge SOC therefore decreases (times T1 to T2). When the user P2 arrives at the destination and uses electricity feed-out (time T3), the state of charge SOC further decreases. When the state of charge SOC becomes the threshold value SOCc, the display in FIG. 3 is rendered on the mobile terminal 94 (time T4). When the electricity feed-out of the battery electric vehicle 20 is further continued and the state of charge SOC becomes the threshold value SOCs, the electricity feed-out is stopped (time T5). Thus, the state of charge SOC of the battery 36 can be prevented from becoming less than the threshold value SOCs, that is, the state of charge SOC of the battery 36 can be prevented from falling below the state of charge SOC (threshold value SOCs) at which the battery electric vehicle 20 manages to travel from the current position thereof (the destination of the user P2) to a charging facility where external charge is possible, so that running out of electricity can be curbed.

In the vehicle lending system 10 including the electricity feeding control server according to the embodiment described above, when the state of charge SOC of the battery 36 becomes the threshold value SOCs during electricity feed-out of the battery electric vehicle 20, the server S transmits an instruction to stop the electricity feeding to the battery electric vehicle 20, and when the instruction to stop the electricity feeding is received, the battery electric vehicle 20 stops the electricity feed-out, whereby it is possible to prevent the battery electric vehicle 20 from running out of electricity.

When the state of charge SOC of the battery 36 becomes the threshold value SOCc, the server S makes a notification to request an input of necessity or unnecessity of continuing the electricity feeding by transmitting an input request, which requests an input of necessity or unnecessity of continuing the electricity feeding, to the mobile terminal 94 carried by the user P2 of the battery electric vehicle 20 that is performing the electricity feed-out, whereby it is possible to restrain such electricity feed-out that causes the battery electric vehicle 20 to become unable to travel to a charging facility.

Further, when the state of charge SOC of the battery 36 is less than the threshold value SOCc during the electricity feed-out, the server S calculates an electricity feeding fee to be charged to the user P2 by using a higher fee per unit time or a higher fee per unit electricity amount than when the state of charge SOC is the threshold value SOCc or more, whereby it is possible to urge the user P2 to restrain the electricity feed-out.

In the vehicle lending system 10 including the electricity feeding control server according to the embodiment, in steps S200 to S230, when the state of charge SOC of the battery 36 becomes the threshold value SOCc, the server S sends a request to input necessity or unnecessity of continuing electricity feeding to the mobile terminal 94 carried by the user P2 of the battery electric vehicle 20 that is performing the electricity feed-out, and in steps S300 to S330, the mobile terminal 94 receives an input indicating whether or not to continue the electricity feeding and transmits the input to the server S. However, steps S200 to S230, steps S300 to S330 do not need to be executed.

Although the process in steps S300 to S330 illustrated in FIG. 2 is executed by the mobile terminal 94 in the embodiment, the process may be executed by the battery electric vehicle 20.

Hereinabove, the mode for carrying out the invention is described by using an embodiment. However, the invention is by no means limited to such an embodiment, and it goes without saying that the invention can be implemented in various embodiments without departing from the gist thereof.

The invention can be used in an industry of manufacturing electricity feeding control servers and vehicle lending systems, and the like.

## Claims

1. An electricity feeding control server (S) adapted to control electricity feed-out at a vehicle (20) that is capable of performing external charge and the electricity feed-out, the external charge charging an on-board electricity storage device (36) with electricity externally supplied, the electricity feed-out feeding electricity from the electricity storage device (36) to external equipment, wherein the electricity feeding control server (S) is configured so that:
when a remaining charge (SOC) of the electricity storage device (36) becomes a first remaining charge (SOCs) during the electricity feed-out, the electricity feeding control server (S) transmits an instruction to stop the electricity feed-out to the vehicle (20), the first remaining charge (SOCs) being a lower limit of the remaining charge (SOC) of the electricity storage device (36) at which the vehicle (20) manages to travel from a current position of the vehicle (20) to a charging facility where the external charge of the electricity storage device (36) is possible by using electricity from outside of the vehicle (20).

2. The electricity feeding control server (S) according to claim 1, wherein the electricity feeding control server (S) is configured so that, when the remaining charge (SOC) of the electricity storage device (36) becomes less than a second remaining charge (SOCc) that is more than the first remaining charge (SOCs) from a remaining charge that is equal to or more than the second remaining charge (SOCc), the electricity feeding control server (S) sends a predetermined notification to a mobile terminal (94) carried by a user (P2) of the vehicle (20) that is performing the electricity feed-out.

3. The electricity feeding control server (S) according to claim 2, wherein:
the predetermined notification is a notification that requests an input indicating whether or not to continue the electricity feed-out from the mobile terminal (94); and
the electricity feeding control server (S) is configured so that, when the instruction to stop the electricity feed-out is received from the mobile terminal (94) after the predetermined notification, the electricity feeding control server (S) transmits the instruction to stop to the vehicle (20).

4. The electricity feeding control server (S) according to claim 2, wherein the electricity feeding control server (S) is configured so that, when the remaining charge (SOC) of the electricity storage device (36) is the second remaining charge (SOCc) or less, the electricity feeding control server (S) calculates an electricity feeding fee to be charged to the user (P2) by using a higher fee per unit time or a higher fee per unit electricity amount than when the remaining charge (SOC) of the electricity storage device (36) exceeds the second remaining charge (SOCc).

5. A vehicle lending method in which a vehicle (20) that is capable of external charge and electricity feed-out is lent to a user (P2) who desires to use the vehicle (20), the external charge charging an on-board electricity storage device (36) with electricity externally supplied, the electricity feed-out feeding electricity from the electricity storage device (36) to external equipment, the vehicle lending method comprising using an electricity feeding control server (S) to control the electricity feed-out at the vehicle (20), wherein:
when a remaining charge (SOC) of the electricity storage device (36) becomes a first remaining charge (SOCs) during the electricity feed-out, the electricity feeding control server (S) transmits an instruction to stop the electricity feed-out to the vehicle (20), the first remaining charge (SOCs) being a lower limit of the remaining charge (SOC) of the electricity storage device (36) at which the vehicle (20) manages to travel from a current position of the vehicle (20) to a charging facility where the external charge of the electricity storage device (36) is possible by using electricity from outside of the vehicle (20); and
when the instruction to stop is received, the vehicle (20) stops the electricity feed-out.
